# EUROPEAN PATENT SPECIFICATION

(11) **EP 1 378 141 B1**
(45) Date of publication and mention of the grant of the patent: **02.08.2006**
(21) Application number: 02713121.8
(22) Date of filing: 26.03.2002
(51) Int. Cl.: H04Q 7/38, G01S 5/02

(54) **METHOD OF DETERMINING POSITION IN A CELLULAR COMMUNICATIONS NETWORK**
VERFAHREN ZUR POSITIONSBESTIMMUNG IN EINEM ZELLULAREN KOMMUNIKATIONSNETZ
PROCEDE PERMETTANT DE DETERMINER UNE POSITION DANS UN RESEAU DE COMMUNICATIONS CELLULAIRE

(30) Priority: 30.03.2001 GB 0107949
(43) Date of publication of application: 07.01.2004
(73) Proprietor: Koninklijke Philips Electronics N.V., 5621 BA Eindhoven (NL)
(72) Inventor: DOOLEY, Saul, R., NL-5656 AA Eindhoven (NL); MORIDI, Said, NL-5656 AA Eindhoven (NL); PORCINO, Domenico, G., NL-5656 AA Eindhoven (NL)
(74) Representative: White, Andrew Gordon
(86) International application number: PCT/IB2002/000993
(87) International publication number: WO 2002/082850

(56) References cited:
- EP-A- 1 030 531
- WO-A-98/10538
- DRANE C ET AL: "POSITIONING GSM TELEPHONES" IEEE COMMUNICATIONS MAGAZINE, IEEE SERVICE CENTER. PISCATAWAY, N.J, US, vol. 36, no. 4, 1 April 1998 (1998-04-01), pages 46-54,58, XP000752570 ISSN: 0163-6804
- CAFFERY J J ET AL: "OVERVIEW OF RADIOLOCATION IN CDMA CELLULAR SYSTEMS" IEEE COMMUNICATIONS MAGAZINE, IEEE SERVICE CENTER. PISCATAWAY, N.J, US, vol. 36, no. 4, 1 April 1998 (1998-04-01), pages 38-45, XP000752569 ISSN: 0163-6804
- REED J H ET AL: "AN OVERVIEW OF THE CHALLENGES AND PROGRESS IN MEETING THE E-911 REQUIREMENT FOR LOCATION SERVICE" IEEE COMMUNICATIONS MAGAZINE, IEEE SERVICE CENTER. PISCATAWAY, N.J, US, vol. 36, no. 4, 1 April 1998 (1998-04-01), pages 30-37, XP000752568 ISSN: 0163-6804

## Description

### Technical Field

The present invention relates to a method of determining position in a cellular communications network which relies on a mobile wireless terminal determining its position on the basis of time of arrival (TOA) measurements on ranging signals transmitted by several base stations whose geographical positions or their antenna positions are known accurately. Such a method is generally referred in the art as cellular positioning.

### Background Art

The use of TOA as a means of determining position is not new in itself. To obtain a reliable position fix, the mobile wireless terminal should be able to receive good quality signals from at least 3 base stations. In a typical cellular network, the probability of receiving three or more signals from distinct base stations is low in many conditions (for example in rural areas or urban canyons). Even when reception of three separate signals is possible, some of them will arrive at the mobile wireless terminal (or handset) severely attenuated, especially in urban areas, and, because a minimum of three signals is required, it is not possible to select the best measurements and discard the less reliable ones. As a result each TOA measurement is likely to have a different reliability.

One method of improving the reliability of TOA measurements is disclosed in US Patent Specification 5,999,124 in which a combination of TOA measurements of GPS satellites and measurements from cellular network ranging signals are used to improve the calculation of the positions by mobile wireless terminal. The use of GPS satellites is acceptable in open areas where mobile wireless terminals can receive good quality radio signals but is less acceptable in urban areas or indoors where buildings or walls may block or attenuate signals from satellites.

Another, different improvement is disclosed in WO 98/10538, wherein the simultaneous use of a plurality of base stations owned and operated by competing commercial mobile radio service provides, within a common radio coverage area increases mobile station location a accuracy and consistency.

### Disclosure of Invention

It is an object of the present invention to improve the reliability of determining the position of a mobile wireless terminal and the accuracy of the estimates when using TOA techniques.

According to one aspect of the present invention there is provided a method of determining the position of a mobile wireless terminal, comprising causing the wireless terminal to adapt to operate on a first network having a plurality of first base stations and effecting position measurements with respect to one or more of the first base stations, causing the wireless terminal to adapt to operate on a second network having a plurality of second base stations and effecting position measurements with respect to one or more of the second base stations, combining the position measurements obtained and determining the position of the wireless terminal from the combined measurements.

According to another aspect of the present invention there is provided a cellular communications system comprising a first network consisting of geographically distributed first base stations, a second network consisting of geographically distributed second base stations and at least one mobile wireless terminal comprising means for receiving wireless signals from the first network and from the second network, means for alternatively selecting signals received from the first and second networks and time of arrival (TOA) determining means for determining the position of the terminal from the signals selected.

According to a further aspect of the present invention there is provided a mobile wireless terminal comprising means for receiving wireless signals from a first network and from a second network, means for alternatively selecting signals received from the first and second networks and time of arrival (TOA) determining means for determining the position of the terminal from the signals selected.

By being able to access at least two networks, it is possible to obtain multiple TOA measurements, that is three or more measurements, and to assign an indication of confidence or weight to each one. Thus when carrying out cellular positioning, the wireless terminal can select the best k measurements, where k is equal to or greater than 3. Another benefit of the method in accordance with the present invention is that it is possible to obtain a position fix by cellular positioning in situations where a network has insufficient base stations for a position fix to be determined. A further benefit of having multiple TOA measurements is that the system can be improved using space diversity, that is, the fact that the multipath will come from different paths and can be averaged out, or frequency diversity when the two networks are operating in different bands.

In one embodiment of the present invention the mobile wireless terminal is a multimode, for example dual band, terminal capable of operating on several types of cellular systems, for example GSM and UMTS 3G FDD mode or IMT-DS (in the UK), IS-95 and IS-136 (in the USA), GSM and cdma 2000 (in South America) and PHS and W-CDMA in the Far East. In the case of GSM and UMTS, GSM base stations are unsynchronised and a technique termed Enhanced Observed-Time-Difference (E-OTD) is required. E-OTD entails receiving timing offset information requested from a respective base station in addition to a ranging signal. A benefit of using a multi-mode mobile wireless terminal for positioning using a plurality of networks is that no additional hardware has to be incorporated into the terminal. Additionally it is estimated that even in a fully-deployed UMTS 3G FDD mode or IMT-DS network, a UMTS receiver will not see more than 2 base stations 12% of the time and hence will be unable to determine its position using the UMTS network alone. By being able to obtain positioning information from a second network, such as GSM, a complete location service can be offered.

In another embodiment of the present invention the first and second networks operate in accordance with the same standard.

If desired the measurements may be transmitted to a remote station which combines these measurements and determines the position of the wireless terminal. Optionally the remote station may transmit the position determined to the wireless terminal.

### Brief Description of Drawings

The present invention will now be described, by way of example, with reference to the accompanying drawings, wherein:
Figure 1 is a block schematic diagram of a dual band cellular telephone system,
Figure 2 is a block schematic diagram of a dual band GSM-UMTS phone,and
Figure 3 is a graph showing the correlation functions for dual mode receivers, the abscissa is calibrated in sample number (time) and the ordinate represents the Normalised Correlation.

In the drawings the same reference numerals have been used to indicate corresponding features.

### Modes for Carrying Out the Invention

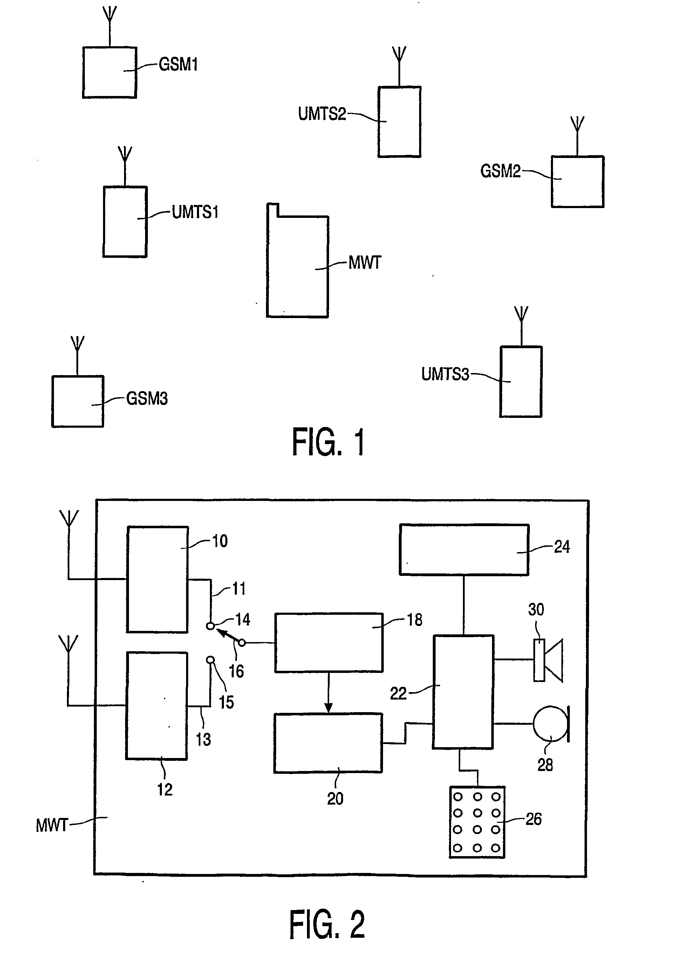

The dual band cellular telephone system shown in Figure 1 comprises a first network comprising three geographically distributed GSM base stations GSM 1, GSM 2 and GSM 3 and a second network comprising three geographically distributed UMTS 3G FDD or IMT-DS base stations UMTS 1, UMTS 2 and UMTS 3. A plurality of dual band mobile wireless terminals, for example cellular telephones, PDAs or other devices capable of communicating on the system, of which one terminal MWT is shown are able to roam into and out of the radio coverage areas of the respective base stations. The base stations of each particular system are coupled, for example by landlines, to a system controller (not shown) which controls the operation of the network so formed. Each of the base stations GSM 1 to GSM 3 and UMTS 1 to UMTS 3 comprises a radio transceiver and a controller.

In order for a mobile wireless terminal MWT to be able to determine its position using time of arrival (TOA) measurements, the respective base stations transmit ranging signals. The ranging signals may include details of the location of each base station or of its transmitting antenna if it is not cosited with the base station. The base station location may be obtained from a different source if required, from MWT's own data base or a remote data base. The terminal MWT analyses the ranging signals in order to make Time-Difference-of-Arrival (TDOA) measurements. The GSM base stations are unsynchronised and a technique known as Enhanced - Observed-Time-Difference (E-OTD) is required. This technique requires the terminal MWT requesting the base station GSM 1, GSM 2 or GSM 3 to supply timing offset information in addition to the ranging signal.

Using one of the cellular systems, that is GSM or UMTS, on a dual band terminal MWT requires reliable TOA measurements from at least 3 base stations. However in urban areas the ranging signals may arrive severely attenuated and also the reliability of say the respective GSM measurements may be different. In the case of UMTS it is estimated that a terminal MWT will not see more than 2 base stations 12% of the time.

In order to be able to obtain a dependable location determination, the dual band terminal MWT makes use of both the GSM and UMTS systems.

Figure 2 illustrates a block schematic diagram of a GSM/UMTS mobile wireless terminal MWT. The terminal comprises a UMTS transceiver 10 and a GSM transceiver 12 having outputs 11, 13 coupled to respective terminals 14, 15 of a change-over switch 16. Ranging signals from the selected transceiver 10 or 12 are applied to a TOA estimator 18. The timing estimates are then relayed to a positioning algorithm stage 20 which determines the location of the terminal MWT. The results are passed to a controller 22 which controls the operation of the terminal in accordance with pre-stored software. A LCD screen 24 is coupled to the controller 22 and may be used to display the position of the terminal MWT. Also coupled to the controller 22 are a keypad 26, a microphone 28 and a loudspeaker 30.

In the case of GSM ranging signals the TOA estimator 18 makes GSM E-OTD positioning measurements and when switched to the UMTS transceiver 10 it makes UMTS TDOA measurements. Relative time difference removal may be carried out in the receivers 10 and 12.

The position algorithm stage 20 combines some or all of the E-OTD and TDOA measurements, which may be grouped or ordered in accordance with a suitable statistical algorithm, for example histograms, or may be weighted individually so that unreliable or less reliable measurements are weighted less or discarded. Also by being able to use more in range base stations the position fix algorithm will yield more accurate results.

Although the terminal MWT makes the TOA measurements and subtracts the observed time offsets via the E-OTD method, the positioning algorithm will involve differencing the TOA measurements to remove the common timing error due to the MWT's oscillator offset.

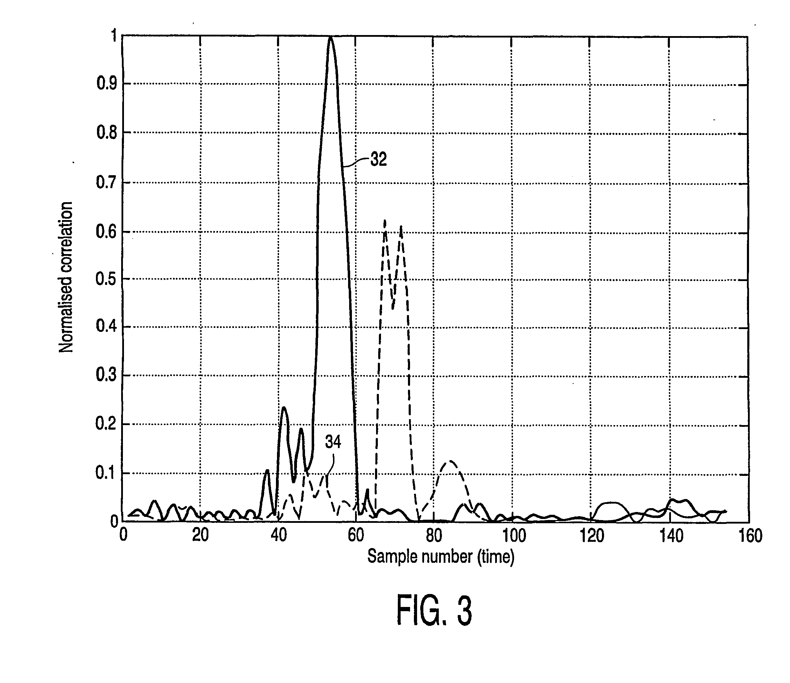

In the event that pairs of the GSM and UMTS base stations are co-located, for example GSM 1 and UMTS 1, GSM 2 and UMTS 2 and GSM 3 and UMT 3, then frequency diversity can help in combining the separate timing estimations. As an example GSM networks operate at 900 MHz or 1800 MHz and the propagation characteristics are different from UMTS downlink at 2100 MHz. Even if the TOA estimation provides the same range, the signal with the higher reliability, for example largest signal-to-noise ratio (SNR) can be selected. Figure 3 illustrates in full lines a GSM TOA estimation 32 and in broken lines a UMTS signal 34. In the area of sample 50 it will be noted that the GSM TOA estimation has a clearly defined peak whereas the UMTS signal is noisy, weak and the peak is ill defined. Accordingly the GSM TOA estimation 32 has the largest SNR and can be chosen with confidence.

Figure 3 can also be used to illustrate a non-line-of-sight measurement from one base station, curve 34, versus a clear measurement, curve 32, from another base station in the case of spatial diversity in which the base stations are not co-located and the multipath characteristics can be completely different.

In practice a dual band MWT in UMTS mode takes ranging measurements from say 2 UMTS base stations and then switches to GSM mode and takes ranging measurements from 4 GSM base stations. Considering TDOAs, there will be 6 TDOA measurements which can be passed from the TOA estimator 18 (Fig. 2) to the triangulation algorithm stage 20 (Fig 2). This results in more measurements than would be available from using GSM or UMTS alone and as a result the positioning will be more accurate because it is based on the better measurements.

By being able to select the better measurements, a marked improvement of the position estimate is obtained. By way of example the following results were obtained in exactly the same conditions for different urban areas and using exactly the same algorithms. Inputs were received from only 3 base stations from one network and 7 base stations from another network and the following weighting is applied - the lower error the figure the better

Errors (in metres, 67% cases)

| | Signals from 3 Base Stations on same network | 7 Base Stations (weighted) on at least 2 networks |
|---|---|---|
| Urban A | 92 metres | 70 metres |
| Urban B | 83 metres | 36 metres |
| Bad Urban | 156 metres | 96 metres |

By selecting the better measurements, an improvement of over 100% in the accuracy can be obtained in some cases.

In a non-illustrated variant of the embodiment shown in Figures 1 and 2, the base stations of the first and second networks operate in accordance with the same standard for example GSM or UMTS. In order to save the operator of each of the first and second networks having to install more base stations for TDOA positioning than are necessary for normal speech and data operations, the operators have agreement whereby the mobile wireless terminals are provided with the necessary software to enable them to recover downlink ranging information signals including the location of their base stations not only from their own network but also from at least one other competing network having base stations in the same locality. As the locations of the base stations from which TOA measurements are made is essential, any convenient means to download this information, for example a small neighbouring database may be used. Thus the mobile wireless terminal and/or a base station is able to compute its position on the basis of the best available signals from at least 2 networks.

If the mobile wireless terminal is designed for operation in accordance with a single standard then it will have a single transceiver rather than two transceivers as shown in Figure 2.

For convenience of description, the mobile wireless terminal has been described in the context of being able to operate in a single band or dual band. However the teachings of the present invention can be applied to multiple-bands and multiple standards.

If desired an operator and/or service provider may charge a premium on these terminals which are capable of receiving ranging information from a network or networks beside its own network.

Optionally the position fix may be done in one of the base stations or a remote station. In such a case, the base station may include means, such as sector antennas, for making angle of arrival (AOA) measurements. Once the position fix has been determined, it can be relayed to the mobile wireless terminal. Optionally the base station or remote station making the position fix may make its own TOA, TDOA or AOA measurements pertaining to the wireless terminal and combine these measurements with those made by the wireless terminal in order to calculate the position fix.

### Industrial Applicability

Location determining systems and apparatus.

## Claims

1. A method of determining the position of a multimode mobile wireless terminal (MWT), comprising causing the wireless terminal to adapt to operate on a first network having a plurality of first base stations (GSM1, GSM2) and effecting position measurements with respect to one or more of the first base stations, causing the wireless terminal to adapt to operate on a second network having a plurality of second base stations (UMTS1, UMTS2) and effecting position measurements with respect to one or more of the second base stations, **characterised in that** the first and second networks (GSM1, GSM2, UMTS1, UMTS2) operate in accordance with different standards and wherein the position measurements obtained are combined and the position of the wireless terminal is determined from the combined measurements.

2. A method as claimed in claim 1, **characterised in that** the measurements are Enhanced Observed Time Difference (E-OTD).

3. A method as claimed in claim 1 or 2, **characterised in that** the measurements are Time Difference Of Arrival (TDOA).

4. A method as claimed in claim 1, 2 or 3, **characterised in that** the position measurements are weighted when combined.

5. A method as claimed in any one of claims 1 to 4, **characterised in that** angle of arrival (AOA) measurements are used, optionally combined with TOA or TDOA measurements, to determine the position of the wireless terminal.

6. A method as claimed in claim 5, **characterised by** the mobile terminal (MWT) transmitting the position measurements made with respect to the first (GSM1) and second base stations (UMTS1) to a remote station, in that the remote station combines the position measurements, and in that the remote station determines the position of the wireless terminal from the combined measurements.

7. A method as claimed in claim 6, **characterised by** the remote station transmitting the position of the wireless terminal to the wireless terminal.

8. A method as claimed in claim 6 or 7, **characterised by** the remote station making TOA, TDOA or AOA measurements pertaining to the position of the wireless terminal and by combining these measurements with the measurements made by the wireless terminal in order to calculate the position of the wireless terminal.

9. A cellular communications system **characterised by** a first network operating in accordance with a first standard and consisting of geographically distributed first base stations, a second network operating in accordance with a different second standard and consisting of geographically distributed second base stations and at least one multimode mobile wireless terminal comprising means for receiving wireless signals in accordance with said first standard from said first network and wireless signals in accordance with said different second standard from said second network, means for alternatively selecting signals received from the first and second networks and time of arrival (TOA) determining means for determining the position of the terminal from the signals selected.

10. A multimode mobile wireless terminal (MWT) comprising means (12, 10) for receiving wireless signals from a first network operating in accordance with a first standard and from a second network operating in accordance with a different second standard, means (16) for alternatively selecting signals received from the first and second networks and time of arrival (TOA) determining means (18) for determining the position of the terminal from the signals selected.

11. A terminal as claimed in claim 10, **characterised in that** the receiving means (12, 10) includes means for removing relative time difference and the TOA determining means comprises a TOA estimator (18) and a positioning algorithm stage (20).

12. A terminal as claimed in claim 11, **characterised in that** weighting means (20) are provided for weighting the output from the TOA estimator on the basis of the less reliable the signal, the lower the weighting function.

## Patentansprüche

1. Verfahren zum Bestimmen der Position eines mobilen drahtlosen Multi-mode-Endgeräts (MWT), das das Verursachen des Anpassens des drahtlosen Endgeräts zum Arbeiten auf einem ersten Netz, das mehrere erste Basisstationen (GSM1, GSM2) hat, und das Durchführen von Positionsmessungen in Bezug auf eine oder mehrere der ersten Basisstationen umfasst, wobei das Anpassen des drahtlosen Endgeräts zum Arbeiten auf einem zweiten Netz verursacht wird, das mehrere zweite Basisstationen (UMTS 1, UMTS2) hat, und Positionsmessungen in Bezug auf eine oder mehrere der zweiten Basisstationen durchgeführt werden, **dadurch gekennzeichnet, dass** die ersten und zweiten Netze (GSM1, GSM2, UMTS1, UMTS2) gemäß unterschiedlichen Standards arbeiten und wobei die erhaltenen Positionsmessungen kombiniert werden und die Position des drahtlosen Endgeräts von den kombinierten Messungen bestimmt wird.

2. Verfahren nach Anspruch 1, **dadurch gekennzeichnet, dass** die Messungen Enhanced Observed Time Difference (E-OTD) sind.

3. Verfahren nach Anspruch 1 oder 2, **dadurch gekennzeichnet, dass** die Messungen Time Difference Of Arrival (TDOA) sind.

4. Verfahren nach Anspruch 1, 2 oder 3, **dadurch gekennzeichnet, dass** die Positionsmessungen beim Kombinieren gewichtet werden.

5. Verfahren nach einem der Ansprüche 1 bis 4, **dadurch gekennzeichnet, dass** Angle of Arrival (AOA) Messungen verwendet werden, die wahlweise mit TOA- oder TDOA-Messungen kombiniert werden, um die Position des drahtlosen Endgeräts zu bestimmen.

6. Verfahren nach Anspruch 5, **dadurch gekennzeichnet, dass** das mobile Endgerät (MWT), das die Positionsmessungen, die in Bezug auf die ersten (GSM1) und zweiten Basisstationen (UMTS1) vorgenommen wurden, an eine Außenstation sendet, **dadurch**, dass die Außenstation die Positionsmessungen kombiniert und **dadurch**, dass die Außenstation die Position des drahtlosen Endgeräts von den kombinierten Messungen bestimmt.

7. Verfahren nach Anspruch 6, **dadurch gekennzeichnet, dass** die Außenstation die Position des drahtlosen Endgeräts an das drahtlose Endgerät sendet.

8. Verfahren nach Anspruch 6 oder 7, **dadurch gekennzeichnet, dass** die Außenstation TOA-, TDOA- oder AOA-Messungen, die die Position des drahtlosen Endgeräts betreffen, vornimmt, und dass diese Messungen mit den Messungen, die durch das drahtlose Endgerät vorgenommen wurden, kombiniert werden, um die Position des drahtlosen Endgeräts zu berechnen.

9. Zellulares Kommunikationssystem, **gekennzeichnet durch** ein erstes Netz, das gemäß einem ersten Standard arbeitet und aus geographisch verteilten ersten Basisstationen besteht, und ein zweites Netz, das gemäß einem unterschiedlichen zweiten Standard arbeitet und aus geographisch verteilten zweiten Basisstationen besteht, und mindestens ein mobiles drahtloses Multimode-Endgerät, das Mittel zum Empfangen von drahtlosen Signalen gemäß dem ersten Standard von dem ersten Netz und von drahtlosen Signalen gemäß dem unterschiedlichen zweiten Standard von dem zweiten Netz, Mittel zum alternativen Auswählen von Signalen, die von den ersten und zweiten Netzen empfangen werden, und Time Of Arrival (TOA) Bestimmungsmittel zum Bestimmen der Position des Endgeräts von den ausgewählten Signalen umfasst.

10. Mobiles drahtloses Multimode-Endgerät (MWT), das Mittel (10, 12) zum Empfangen von drahtlosen Signalen von einem ersten Netz, das gemäß einem ersten Standard arbeitet, und von einem zweiten Netz, das gemäß einem unterschiedlichen zweiten Standard arbeitet, Mittel (16) zum alternativen Auswählen von von den ersten und zweiten Netzen empfangenen Signalen und Time-Of-Arrival (TOA) Bestimmungsmittel (18) zum Bestimmen der Position des Endgeräts von den ausgewählten Signalen umfasst.

11. Endgerät nach Anspruch 10, **dadurch gekennzeichnet, dass** das Empfangsmittel (12, 10) Mittel zum Entfernen der entsprechenden Zeitdifferenz umfasst und das TOA-Bestimmungsmittel einen TOA-Schätzer (18) und eine Positionierungsalgorithmusstufe (20) umfasst.

12. Endgerät nach Anspruch 11, **dadurch gekennzeichnet, dass** Gewichtungsmittel (20) zum Gewichten der Ausgabe vom TOA-Schätzer auf der Basis je weniger zuverlässig das Signal, desto niedriger die Gewichtungsfunktion, bereitgestellt werden.

## Revendications

1. Procédé permettant de déterminer la position d'un terminal sans fil mobile (MWT) multimode, comprenant le fait d'amener le terminal sans fil à s'adapter pour fonctionner sur un premier réseau comportant une pluralité de premières stations de base (GSM1, GSM2) et l'exécution de mesures de position par rapport à une ou plusieurs des premières stations de base, le fait d'amener le terminal sans fil à s'adapter à fonctionner sur un deuxième réseau comportant une pluralité de deuxièmes stations de base (UMTS1, UMTS2) et l'exécution de mesures de position par rapport à une ou plusieurs des deuxièmes stations de base, **caractérisé en ce que** les premier et deuxième réseaux (GSM1, GSM2, UMTS1, UMTS2) fonctionnent selon des normes différentes et dans lequel les mesures de position obtenues sont combinées et la position du terminal sans fil est déterminée à partir des mesures combinées.

2. Procédé suivant la revendication 1, **caractérisé en ce que** les mesures sont un calcul amélioré de la différence de temps observée (E-OTD).

3. Procédé suivant la revendication 1 ou 2, **caractérisé en ce que** les mesures sont une différence de temps d'arrivée (TDOA).

4. Procédé suivant la revendication 1, 2 ou 3, **caractérisé en ce que** les mesures de position sont pondérées lorsqu'elles sont combinées.

5. Procédé suivant l'une quelconque des revendications 1 à 4, **caractérisé en ce que** des mesures de l'angle d'arrivée (AOA) sont utilisées, éventuellement combinées à des mesures du TOA ou de la TDOA, pour déterminer la position du terminal sans fil.

6. Procédé suivant la revendication 5, **caractérisé en ce que** le terminal mobile (MWT) transmet les mesures de position effectuées par rapport aux premières (GSM1) et aux deuxièmes stations de base (UMTS 1) à une station distante, **en ce que** la station distante combine les mesures de position, et **en ce que** la station distante détermine la position du terminal sans fil à partir des mesures combinées.

7. Procédé suivant la revendication 6, **caractérisé en ce que** la station distante transmet la position du terminal sans fil au terminal sans fil.

8. Procédé suivant la revendication 6 ou 7, **caractérisé en ce que** la station distante effectue des mesures du TOA, de la TDOA ou de l'AOA se rapportant à la position du terminal sans fil et par la combinaison de ces mesures aux mesures effectuées par le terminal sans fil afin de calculer la position du terminal sans fil.

9. Système de communication cellulaire **caractérisé par** un premier réseau fonctionnant selon une première norme et composé de premières stations de base géographiquement disséminées, un deuxième réseau fonctionnant selon une deuxième norme, différente, et composé de deuxièmes stations de base géographiquement disséminées et au moins un terminal sans fil mobile multimode comprenant des moyens pour recevoir des signaux sans fil selon ladite première norme dudit premier réseau et des signaux sans fil selon ladite deuxième norme différente dudit deuxième réseau, des moyens pour sélectionner alternativement des signaux reçus du premier et du deuxième réseaux et des moyens de détermination du temps d'arrivée (TOA) pour déterminer la position du terminal à partir des signaux sélectionnés.

10. Terminal sans fil mobile (MWT) multimode comprenant des moyens (12, 10) pour recevoir des signaux sans fil d'un premier réseau fonctionnant selon une première norme et d'un deuxième réseau fonctionnant selon une deuxième norme, différente, des moyens (16) pour sélectionner alternativement des signaux reçus du premier et du deuxième réseaux et des moyens de détermination du temps d'arrivée (TOA) (18) pour déterminer la position du terminal à partir des signaux sélectionnés.

11. Terminal suivant la revendication 10, **caractérisé en ce que** les moyens de réception (12, 10) comprennent des moyens pour éliminer une différence de temps relative et les moyens de détermination de TOA comprennent un estimateur de TOA (18) et un étage d'algorithme de positionnement (20).

12. Terminal suivant la revendication 11, **caractérisé en ce que** des moyens de pondération (20) sont prévus pour pondérer la sortie venant de l'estimateur de TOA sur la base du signal le moins fiable, la fonction de pondération la plus faible.
